# EUROPEAN PATENT APPLICATION

(11) **EP 2 624 657 A1**
(43) Date of publication of application: **07.08.2013**
(21) Application number: 12305121.1
(22) Date of filing: 01.02.2012
(51) Int. Cl.: H04W 76/02

(54) **Method of communication between a user equipment and a base station in a cellular network using a connection identifier**

(71) Applicant: ST-Ericsson SA, 1228 Plan-les-Ouates (CH)
(72) Inventor: Sfar, Safouane, 72000 Le Mans (FR)
(74) Representative: Hirsch & Associés

(57) **Abstract**

Embodiments of the invention concern a method of communication between a user equipment (1) and base stations (5) in a cellular network, using (S2) a connection identifier (C-RNTI) dedicated to a connection established between said user equipment (1) and a given base station (5), changing (S4) said connection identifier (C-RNTI) when there is a need for establishing a new connection (S3), wherein said method updates (S6, S7) said connection identifier (C-RNTI), when said established connection duration becomes too long (S5), even in absence of said need.

## Description

### TECHNICAL FIELD

The invention relates to methods of communication between a user equipment and a base station in a cellular network using a connection identifier, for a connection established between the user equipment and the base station.

### BACKGROUND

When a connection is established between a given user equipment and a given base station in a cellular network, a dedicated connection identifier is associated to this established connection. For example, a Cell Radio Network Temporary Identifier (C-RNTI) provides a unique user equipment identification (UE identification) at the cell level. It is assigned by the network when a user equipment is connected to the network and it used to assure the exchange between the intended UE and the network.

The C-RNTI assignment procedure is described in 3GPP TS 36.321 document and can be done also via a Radio Resource Control messages as described in 3GPP TS 36.331 document..

In order to provide fast and flexible scheduling capability, this connection identifier C-RNTI is transmitted with its scheduling information in a layer one control data without any encryption or protection. Today, as this connection identifier C-RNTI in the layer one control signal is readable, because neither encrypted nor protected, a (e.g. passive) attacker can know whether the user equipment using this connection identifier C-RNTI is still in the same cell or not. Using the same connection identifier C-RNTI within one cell provides presence information of the user equipment for the attacker. This allows tracking the user equipment over multiple cells. The quick and flexible exchange of the connection identifier makes this connection identifier more sensitive to hacking. Indeed, this connection identifier will be more sensitive to hacking when the user equipment will stay for long periods immobile in the cellular network (e.g. will stay within the same cell).

According to a first prior art, for example described in patent application EP2343937, it is known a process in which there is a transmission of a physical downlink control channel (PDCCH) signaling addressed to an SPS cell radio network temporary identifier of the UE, to configure or reconfigure a semi-persistent transmission resource to the UE to trigger an SPS retransmission.

According to a second prior art, for example described in patent application CN101616402, it is known a process in which, if the persistent scheduling C-RNTI is needed to be distributed to the terminal, the target base station and the terminal updates a temporary C-RNTI distributed in a random access process into a persistent scheduling C-RNTI. It can reduce radio resource control signaling load during terminal switching.

### SUMMARY

Embodiments of the invention aim to keep the existing rapidity and flexibility in signaling containing the connection identifier, while at the same time improving the security of this connection identifier by making it less sensitive to attacks, especially when user equipment stays for a long period within the same cell, being in that situation all the more sensitive to hacking attacks, so all the more vulnerable.

In case the user equipment stays for a long period of time in a single cell, it is considered interesting, according to some embodiments of the invention, to securely re-allocate the connection identifier (e.g. C-RNTI) to make it more difficult for an attacker to get information about a single user equipment presence in the cell. This also makes it more difficult for an attacker to detect if new user equipments arrive in the cell or if they are just user equipments refreshing their connection identifier.

According to some embodiments of the invention, the idea is to introduce a new procedure to update the connection identifier, for example continuously, periodically or in a random manner. In some embodiments, the procedure is used when the user equipment stays for a long period of time in a single cell. This connection identifier updating will be performed even when there is no need (due to e.g. mobility) to change connection identifier (e.g. C-RNTI), unlike in prior art when there is such a need during a handover for example. It may be considered that there is no need to change connection identifier (e.g. C-RNTI) when the established connection could go on without the change, which is not the case when a handover has to be performed for example.

According to some embodiments of the invention, the user equipment should preferably detect if it is in mobility conditions or not. In an alternative, the presence or absence of these mobility conditions can be evaluated in Radio Access Network, so at the base station side.

Unlike first prior art which concerns a persistent scheduling identifier, embodiments of the invention deal with an identifier dedicated to one connection established between a given user equipment and a given base station. Therefore, the contemplated identifiers are not of the same type and do not have the same function in both cases.

Unlike second prior art where the contemplated problem deals with reducing radio resource control signaling during terminal switching, i.e. during a handover, some embodiments of the invention deal with improving the security within an established connection between user equipment and base station by updating dedicated identifier. Therefore the contemplated situation is not the same in both cases.

This object and other objects may be achieved with a method of communication between a user equipment and a base station in a cellular network,
- using in communication a connection identifier dedicated to a connection established between said user equipment and said base station,
- detecting whether an established connection duration is too long, and
- updating said connection identifier, if said established connection duration is too long.

Preferred embodiments comprise one or more of the following features:
- said updating of said connection identifier, if said established connection duration is too long, is performed even if said established connection could go on without said updating.
- the communication method further comprises:
- detecting whether a new connection is to be established, and
- changing said connection identifier when the new connection is to be established,
   wherein establishing a new connection is triggered by at least of:
- an event which has impacted said established connection,
- a handover event,
- a reestablishment in said established connection, and
- a break of said established connection.
- said connection identifier is a Cell Radio Network Temporary Identifier.
- said connection identifier is updated through a reestablishment of a connection between said user equipment and said given base station.
- said connection identifier updating is triggered in a Radio Access Network part of cellular network.
- said connection identifier updating is triggered by said user equipment.
- said connection identifier updating is triggered through a new cause included in the cause signaling field of a Radio Resource Control Connection Reestablishment Request message.
- said connection identifier updating is triggered periodically or is triggered at random.
- said established connection duration for triggering said connection identifier updating is computed only when said user equipment stays in a limited geographical area, preferably in a cell, for a given duration of time, within said cellular network.

This object and other objects may be achieved with a computer program product comprising a computer readable medium, having thereon a computer program comprising program instructions, the computer program being loadable into a data-processing unit and adapted to cause execution of a part of the method according to the invention performed by said user equipment, when the computer program is run by the data-processing unit.

This object and other objects may be achieved with a computer program product comprising a computer readable medium, having thereon a computer program comprising program instructions, the computer program being loadable into a data-processing unit and adapted to cause execution of a part the method according to the invention performed by said base station, when the computer program is run by the data-processing unit.

This object and other objects may be achieved with an arrangement for a user equipment of a cellular network, comprising:
- a transceiver adapted to communicate with a given base station of the cellular network during an established connection,
- a microprocessor adapted to use a connection identifier dedicated to said established connection, said connection identifier being changed when there is a need for establishing a new connection,
wherein said microprocessor is adapted to trigger an updating of said connection identifier, when said established connection duration becomes too long, even in absence of said need.

This object and other objects may be achieved with a user equipment of a cellular network, comprising an arrangement for a user equipment of a cellular network.

This object and other objects may be achieved with a Radio Access Network of a cellular network, comprising a base station adapted to communicate with a given user equipment during an established connection, to use a connection identifier dedicated to a connection established between said user equipment and said base station, to change said connection identifier when there is a need for establishing a new connection, wherein said base station is adapted to trigger an updating of said connection identifier, when said established connection duration becomes too long, even in absence of said need.

According to some embodiments of the invention, said connection identifier is regularly exchanged between said user equipment and said given base station during said established connection.

According to some embodiments of the invention, said connection identifier is (e.g. regularly) exchanged between a layer of said user equipment lower than Radio Resource Control (RRC) layer and a layer of said given base station lower than Radio Resource Control (RRC) layer during established connection.

According to some embodiments of the invention, said connection identifier is (e.g. regularly) exchanged between Medium Access Control (MAC) layer of said user equipment and Medium Access Control (MAC) layer of said given base station during established connection.

According to some embodiments of the invention, there is only one connection identifier associated with a given connection between said user equipment and a given base station.

According to some embodiments of the invention, there is only one connection identifier associated with a given connection between said user equipment and a given base station, for a given service provided at cellular network side through said given base station to said user equipment.

According to some embodiments of the invention, said established connection duration for triggering said connection identifier updating is reset to zero each time user equipment moves in said cellular network, for example goes from one cell to another different cell.

According to some embodiments of the invention, said base station is an eNodeB in a Long Term Evolution (LTE) network.

According to some embodiments of the invention, said new connection is established between said user equipment and said given base station. For example, said new connection is a connection reestablishment or a connection reconfiguration.

According to some embodiments of the invention, said new connection is established between said user equipment and another base station different from said given base station. For example, said new connection is a handover between two neighbor base stations.

According to some embodiments of the invention, there is a user equipment comprising an arrangement for a user equipment according to some embodiments of the invention.

According to some embodiments of the invention, the communication method can start with establishing a connection between said user equipment and said base station, the establishing including dedicating a connection identifier to the connection.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows an example of performing the steps of the communication method according to some embodiments of the invention.
Fig. 2 shows an example of a user equipment according to some embodiments of the invention that can be used to perform the steps of the communication method according to some embodiments of the invention.
Fig. 3 shows an example of a radio access network according to some embodiments of the invention that can be used to perform the steps of the communication method according to some embodiments of the invention.
Fig. 4 shows an example of a first alternative of detailed message exchange, for part of the communication method, between a user equipment and a base station while performing the steps of the communication method according to some embodiments of the invention.
Fig. 5 shows an example of a second alternative of detailed message exchange, for part of the communication method, between a user equipment and a base station while performing the steps of the communication method according to some embodiments of the invention.

### DETAILED DESCRIPTION OF THE INVENTION

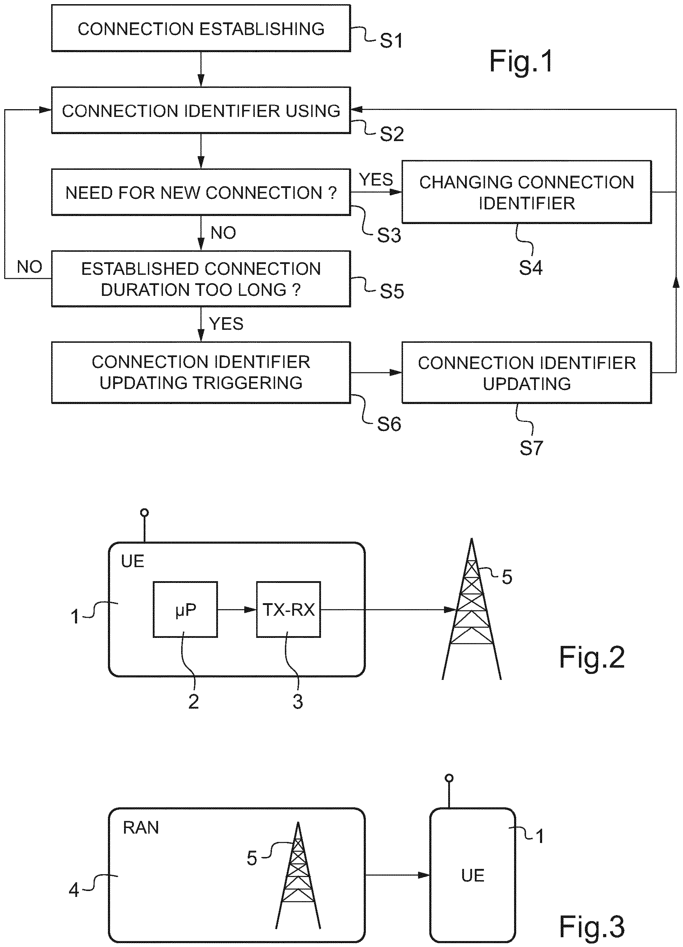

Fig. 1 shows an example of performing the steps of the communication method according to some embodiments of the invention. This communication method comprises a connection establishing step S1, a connection identifier using step S2, a step S3 evaluating if there is a need for a new connection or not, a connection identifier changing step S4, a step S5 evaluating if the established connection duration is too long or not, a connection identifier updating triggering step S6, a connection identifier updating step S7. The whole following description will preferably use C-RNTI as a preferred connection identifier, but another connection identifier may be used in other networks.

In step S1, a connection is established between a given user equipment and a given base station associated to a given cell in a cellular network. When establishing this connection, a connection identifier (e.g. C-RNTI) is associated to this connection. This connection identifier will then be used, for all or part of the future message exchanges between the user equipment and the base station. At end of step S1, the method goes to step S2.

Message is here taken in a large meaning, including layer one control data.

In step S2, during message exchanges between the user equipment and the base station, this connection identifier is included in sent messages(e.g. layer one control data), in part of them or preferably in all of them, so that when receiving this sent message (e.g. layer one control data), the other communicating party, whether the user equipment or the base station, can know to which connection this received message (e.g. layer one control data) is related. This connection identifier may be regularly exchanged, preferably permanently exchanged, between the user equipment and the given base station during the established connection between them. Preferably, this connection identifier is a Cell Radio Network Temporary Identifier (C-RNTI). At end of step S2, the method goes to step S3.

In step S3, the need for a new connection is evaluated. At the base station side, it is checked whether one of the specified and listed causes to establish a new connection after breaking the existing connection between the user equipment and the base station, is present or not. For example, one of these causes may be a need for a handover, or may be a connection loss because of too low received power, or may be a broken connection because of too low Quality of Service no more meeting minimum requirement. More generally speaking, a need for establishing a new connection may be triggered by at least an event which has impacted, preferably degraded, the established connection. This need for establishing a new connection may arise from a failure in the established connection or from a break of the established connection. Either there is such a need or there no such need. If there is such a need, the method goes to step S4. If there is no such need, the method goes to step S5.

According to embodiments of the invention, a particularity is that there will be an update of the connection identifier triggered by a connection change (which can be a simple renewal in case the connection is reestablished), when there is no need to change connection. That connection change associated to a connection identifier update, will be performed for security improvement of the communication between the user equipment and the base station, even if it is not needed for fulfillment of the communication.

In step S4, since the existing connection between the user equipment and the base station is ended and replaced by a new connection, there is an associated change of connection identifier, the old connection identifier being replaced by the new connection identifier (e.g. C-RNTI). From a security point of view, this is good because this will make attacks harder to be performed. There is then no need, within short notice, to change again the connection in order to change again the connection identifier. At end of step S4, the method goes to step S2.

In step S5, contrary to step S4, there has been no change of connection, so there has been no change of connection identifier (e.g. C-RNTI). This situation will most often happen when the user equipment is not in mobile conditions, when the user equipment stays in the same cell, and especially when received power level and provided Quality of Service remain sufficient to meet minimum requirements during the whole (or a large part of the) connection duration. For example, a mobile phone is used at user's desk at home when transmission conditions are satisfactory. More generally, preferably, this established connection duration for triggering said connection identifier updating will be computed only when the user equipment stays immobile within the cellular network, staying within the same cell. Then, if the user equipment stays immobile within cellular network for a quite long period of time, it will become easier for attackers to succeed in breaking the confidentiality of the connection identifier (e.g. C-RNTI). Therefore, even if not needed by any external event, like handover or loss of connection, a change of connection and of associated connection identifier, according to embodiments of the invention, would be here most useful. If duration of the established connection is not yet too long, then the method goes back to step S2, i.e. to normal and classical communication between the user equipment and the base station while continuing to use the existing connection identifier. If duration of the established connection becomes too long, then the method goes to step S6.

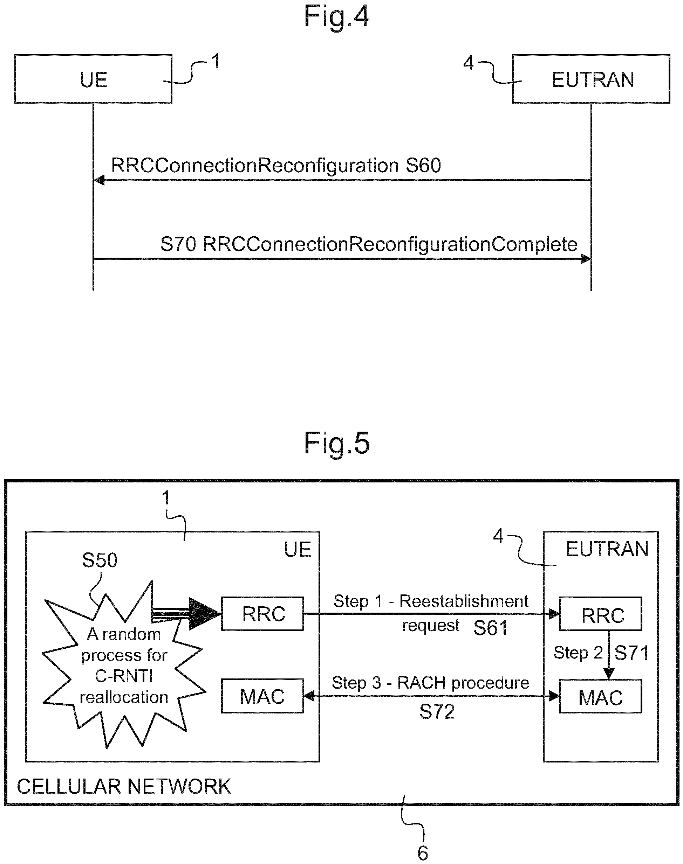

In step S5, as will be explained later, this evaluation of the duration of the established connection between one given user equipment and one given base station can be evaluated at the base station side, i.e. at the network side, in a first alternative described in more detail with respect to figure 4, or at the user equipment side, in a second alternative described in more detail with respect to figure 5.

In step S5, there can be several ways to evaluate whether duration of the established connection is too long or not. In a first option, duration of the established connection will be merely considered to be too long if this duration exceeds a given predetermined threshold, this threshold value being for example in the range of 2-15 minutes, example values including 240 seconds, or 480 seconds, or 720 seconds. In a second alternative (more secure since it will make harder for a potential attacker to detect the change of connection identifier), the duration evaluation is performed at random. More precisely, a connection duration of the established connection may be considered to be too long if from time to time, preferably periodically, the random (or pseudo random) number between 0 and 1 which is drawn exceeds a predetermined threshold, this threshold value being for example 0.5, or 0.75, or 0.9. The time threshold of the first option, as well as the period of drawing a random number and the threshold this random number shall exceed to trigger a change of connection and the associated change of the connection identifier, may be the same or may in an optional implementation mode not be the same for each and every situation. In this last case, those parameters could preferably depend on the security level associated to the service corresponding to the established connection between the user equipment and the base station. The higher the security level is, the lower will be the time thresholds to exceed, the time periods to draw a random number, and/or the thresholds to exceed for the random number.

Of course, other definitions of the duration being too long may be equally applicable, as well as other algorithms to randomize the duration length.

In step S6, a change of connection is triggered and an associated update of the connection identifier is triggered too. The party to the communication, either the user equipment or the base station, which has evaluated the duration of the established connection, will also be the one to trigger the change of connection as well as the associated update of the connection identifier. At end of step S6, the method goes to step S7.

In step S7, a new connection replaces the established connection between the user equipment and the base station. The connection identifier is updated accordingly. This change of connection and the associated connection identifier is preferably performed in the same way as for the other causes of connection changes, like for example handover or loss of connection. Preferably, this connection identifier is updated through a reestablishment of a connection between the same user equipment and the same base station as in the existing former established connection. At end of step S7, the method goes to step S2.

Fig. 2 shows an example of a user equipment according to some embodiments of the invention that can be used to perform the steps of the communication method according to some embodiments of the invention. A user equipment 1 of a cellular network comprises a transceiver 3 and a microprocessor 2 linked together. The transceiver 3 is adapted to communicate with a given base station 5 of the cellular network during an established connection.

The microprocessor 2 is adapted to use a connection identifier dedicated to this established connection, the connection identifier being changed when there is a need for establishing a new connection. The microprocessor 2 is also adapted to trigger an updating of the connection identifier, when the established connection duration becomes too long, even in absence of a need to do so which would come from an external event.

Fig. 3 shows an example of a radio access network according to some embodiments of the invention that can be used to perform the steps of the communication method according to some embodiments of the invention. A Radio Access Network 4 (RAN) of a cellular network comprises at least a base station 5.

This base station 5 is adapted to communicate with a given user equipment 1 during an established connection, to use a connection identifier dedicated to the connection established between the user equipment 1 and the base station 5, to change the connection identifier when there is a need for establishing a new connection. This base station 5 is also adapted to trigger an updating of the connection identifier, when the established connection duration becomes too long, even in absence of a need to do so, caused for example by an external event.

Fig. 4 shows an example of a first alternative of detailed message exchange, for part of the communication method, between a user equipment and a base station while performing the steps of the communication method according to some embodiments of the invention. Only part of RRC connection reconfiguration procedure of interest will be hereby described. Complete information about RRC connection reconfiguration procedure can be found in section 5.3.5 of TS 36.331 specification, hereby incorporated by reference. The connection identifier updating is triggered in a Radio Access Network (RAN) part of the cellular network. More precisely, preferably, the connection identifier updating is triggered by a Radio Resource Control (RRC) Connection Reconfiguration message.

In this first alternative, the update will be triggered at network side, for example at an eNodeB side. This performance at network side is easier for the network, because it will need no change in existing specification for communication between the user equipment and the base station. Indeed, there is no implementation of any amendment in the existing specification. Triggering the connection identifier at network side allows for keeping unchanged the communication process between user equipment and base station, while resulting in a substantial security improvement of this communication. Here a complete compatibility with existing communication process is kept while a good security improvement is offered.

A random process for C-RNTI reallocation will be the trigger of the C-RNTI update at the network side, more precisely at the EUTRAN 4 side. For example, a random number RAND uniformly distributed in the range 0-1 is drawn. If RAND is lower than a fixed threshold, a new C-RNTI is required. Hence, the RRC module at the EUTRAN 4 side, using the RRC connection reconfiguration procedure in the steps S60 and S70, will send the new C-RNTI to the user equipment 1.

Then, the lower layers signaling, i.e. the MAC layer and the L1 layer signaling, will be configured with the new C-RNTI and RACH procedure will be initiated, like usual after any connection change. In case of non-contention based random access procedure being used, the EUTRAN 4 assigns a dedicated random access preamble to the user equipment 1. In case of contention based random access procedure being used, a Scheduled Transmission on UL-SCH will convey the new C-RNTI of the user equipment 1. This Scheduled Transmission was already allocated via the RRC connection reconfiguration request message.

Fig. 5 shows an example of a second alternative of detailed message exchange, for part of the communication method, between a user equipment and a base station while performing the steps of the communication method according to some embodiments of the invention. Only part of RRC connection re-establishment procedure of interest will be hereby described. Complete information about RRC connection re-establishment procedure can be found in section 5.3.7 of TS 36.331 specification, hereby incorporated by reference. The connection identifier updating is triggered by the user equipment. More precisely, preferably, the connection identifier updating is triggered by a Radio Resource Control (RRC) Connection Reestablishment Request message. User equipment 1 and ETRAN 4 belong to a cellular network 6, as in the other figures.

In this second alternative, the update will be triggered by the user equipment and done with the help of the rest of the network, especially with the help of the base station which can be for example an eNodeB. This second alternative is more secure than the former first alternative, because it becomes harder for attacker to identify a connection identifier change, since this connection identifier change is triggered by user equipment itself.

On the other hand, a slight amendment in the existing specification will be needed, through the introduction of a new cause for the connection change. However, no new type of message adding or new type of exchange adding will be needed, so that the amendment of existing communication process will be minimal, while still resulting in a substantial security improvement for the communication. Here, a high compatibility with existing communication process is kept while an even better security improvement than in former first alternative is offered. In the RRC connection reestablishment request message, in the Reestablishment Cause, in the existing specification, there are enumerated: reconfiguration Failure, handover Failure, other Failure, spare 1. Here a new cause, for example "Update when Immobile", will be added.

In the same way as mentioned in the first alternative describe in figure 4, a random process step S50 for C-RNTI reallocation will cause triggering of the C-RNTI update. This random process can be defined by the constructor of the user equipment 1. For example, a random number RAND uniformly distributed in the range 0-1 will be drawn. If RAND is lower than a fixed threshold, a new C-RNTI is required. When the Reestablishment request coming from the RRC layer of the user equipment 1 is sent and received by the RRC layer of EUTRAN 4, in a step S61, the RRC connection reestablishment procedure is used. But here, a new cause for this procedure, which is related to C-RNTI update, is introduced as explained before.

Afterwards, the RRC layer of EUTRAN 4 will order, in a step S71, the lower layers of EUTRAN 4, i.e. the MAC layer and the L1 layer, to handle a new RACH procedure for C-RNTI update with the user equipment 1. So, the EUTRAN 4 MAC and L1 layers will wait for a RACH procedure coming from the user equipment 1. So, the lower layers, i.e. the MAC and L1 layer, of the user equipment 1 will then initiate a RACH procedure in step S72. In case of a non-contention based random access procedure being used, the EUTRAN 4 assigns a dedicated random access preamble to the user equipment 1. In case of a contention based random access procedure being used, a Scheduled Transmission on UL-SCH will convey the new C-RNTI of the user equipment 1.

Here is a list of used abbreviations:
C-RNTI = Cell Radio Network Temporary Identifier
EUTRAN = Enhanced Universal Terrestrial Radio Access Network
L1 = layer one (lowest layer) in the OSI reference model (containing seven layers)
LTE = Long Term Evolution
MAC = Medium Access Control
RACH = Random Access Channel
RRC = Radio Resource Control
UE = User Equipment
UL-SCH = Uplink Synchronization Channel

The invention has been described with reference to preferred embodiments. However, many variations are possible within the scope of the invention.

## Claims

1. Method of communication between a user equipment (1) and a base station (5) in a cellular network,
- using (S2) in communication a connection identifier (C-RNTI) dedicated to a connection established between said user equipment (1) and said base station (5),
- detecting (S5) whether an established connection duration is too long, and
- updating (S6, S7) said connection identifier (C-RNTI), if said established connection duration is too long.

2. Method of communication according to claim 1, wherein :
- said updating (S6, S7) of said connection identifier (C-RNTI), if said established connection duration is too long, is performed even if said established connection could go on without said updating.

3. Method of communication according to any of preceding claims, further comprising:
- detecting (S3) whether a new connection is to be established, and
- changing (S4) said connection identifier (C-RNTI) when the new connection is to be established,
wherein establishing a new connection is triggered by at least of:
- an event which has impacted said established connection,
- a handover event, -
a reestablishment in said established connection, and
- a break of said established connection.

4. Method of communication according to any of preceding claims, wherein said connection identifier is a Cell Radio Network Temporary Identifier (C-RNTI).

5. Method of communication according to any of preceding claims, wherein said connection identifier (C-RNTI) is updated through a reestablishment of a connection between said user equipment (1) and said given base station (5).

6. Method of communication according to any of claims 1 to 5, wherein said connection identifier updating is triggered (S6) in a Radio Access Network (RAN) (4) part of cellular network.

7. Method of communication according to any of claims 1 to 5, wherein said connection identifier updating is triggered (S6) by said user equipment (1).

8. Method of communication according to claim 7, wherein said connection identifier updating is triggered (S6) through a new cause included in the cause signaling field of a Radio Resource Control (RRC) Connection Reestablishment Request message.

9. Method of communication according to any of preceding claims, wherein said connection identifier updating is triggered (S6) periodically or is triggered (S6) at random.

10. Method of communication according to any of preceding claims, wherein said established connection duration for triggering said connection identifier updating is computed (S5) only when said user equipment (1) stays in a limited geographical area, preferably in a cell, for a given duration of time, within said cellular network.

11. A computer program product comprising a computer readable medium, having thereon a computer program comprising program instructions, the computer program being loadable into a data-processing unit and adapted to cause execution of a part of the method according to any of preceding claims performed by said user equipment, when the computer program is run by the data-processing unit.

12. A computer program product comprising a computer readable medium, having thereon a computer program comprising program instructions, the computer program being loadable into a data-processing unit and adapted to cause execution of a part the method according to any of claims 1 to 10 performed by said base station, when the computer program is run by the data-processing unit.

13. Arrangement for a user equipment (1) of a cellular network, comprising:
- a transceiver (3) adapted to communicate with a given base station (5) of the cellular network during an established connection,
- a microprocessor (2) adapted to use a connection identifier (C-RNTI) dedicated to said established connection, said connection identifier (C-RNTI) being changed when there is a need for establishing a new connection,
wherein said microprocessor (2) is adapted to trigger an updating of said connection identifier (C-RNTI), when said established connection duration becomes too long, even in absence of said need.

14. User equipment (1) of a cellular network, comprising an arrangement according to claim 13.

15. Radio Access Network (RAN) (4) of a cellular network, comprising a base station (5) adapted to communicate with a given user equipment (1) during an established connection, to use a connection identifier (C-RNTI) dedicated to a connection established between said user equipment (1) and said base station (5), to change said connection identifier (C-RNTI) when there is a need for establishing a new connection, wherein said base station (5) is adapted to trigger an updating of said connection identifier (C-RNTI), when said established connection duration becomes too long, even in absence of said need.
